# EUROPÄISCHE PATENTSCHRIFT

(11) **EP 2 569 385 B1**
(45) Veröffentlichungstag und Bekanntmachung des Hinweises auf die Patenterteilung: **28.01.2015**
(21) Anmeldenummer: 10728113.1
(22) Anmeldetag: 10.05.2010
(51) Int. Cl.: C04B 35/01, C04B 35/109, C09K 3/14

(54) **SCHLEIFKÖRNER AUF BASIS VON ZIRKONKORUND**
ABRASIVE GRAINS BASED ON ZIRCONIA ALUMINA
GRAINS ABRASIFS À BASE DE CORINDON DE ZIRCONE

(43) Veröffentlichungstag der Anmeldung: 20.03.2013
(73) Patentinhaber: Center for Abrasives and Refractories Research & Development C.A.R.R.D. GmbH, 9524 Villach (AT)
(72) Erfinder: GEBHARDT, Knuth, 9580 Drobollach (AT)
(74) Vertreter: Margue, Robert Germain
(86) Internationale Anmeldenummer: PCT/EP2010/002882
(87) Internationale Veröffentlichungsnummer: WO 2011/141037

(56) Entgegenhaltungen:
- WO-A1-02/46326
- US-A1- 2004 040 218
- DATABASE WPI Week 198506 Thomson Scientific, London, GB; AN 1985-034234 XP002615761, & JP 59 227726 A (NIPPON KENMAZAI KOG) 21. Dezember 1984 (1984-12-21) in der Anmeldung erwähnt

## Beschreibung

Die vorliegende Erfindung betrifft Schleifkörner auf Basis von im elektrischen Lichtbogenofen geschmolzenem Zirkonkorund mit den Merkmalen des Oberbegriffs des Anspruchs 1.

Gattungsgemäße keramische Partikel, die durch extrem schnelles Abkühlen einer Schmelze aus Aluminiumoxid und Zirkonoxid hergestellt werden, sind schon seit vielen Jahren bekannt und werden erfolgreich als Schleifkörner und/oder feuerfeste Materialien eingesetzt. Insbesondere bei der Verwendung als Schleifkörner hat sich herausgestellt, dass hohe Anteile an tetragonaler Hochtemperaturmodifikation des Zirkonoxids im Produkt sich vorteilhaft auf die Qualität und Abtragsleistung der Schleifkörner auswirken. Die Hochtemperaturmodifikation des Zirkonoxids im geschmolzenen Zirkonkorund wird üblicherweise durch schnelles Abschrecken der Schmelze aus Aluminiumoxid und Zirkonoxid in Gegenwart von allgemein bekannten als Stabilisatoren für die Hochtemperaturmodifikation wirkenden Metalloxiden, wie z. B. Titanoxid, Yttriumoxid, Magnesiumoxid, Kalziumoxid oder anderen, erhalten.

So wird in der US 5,525,135 (EP 0 595 081 B1) ein Schleifkorn auf Basis von Zirkonkorund beschrieben, bei dem mehr als 90 Gew.-% des Zirkonoxids in der tetragonalen Hochtemperaturmodifikation vorliegen. Die Stabilisierung der Hochtemperaturphase erfolgt in diesem Fall durch die Zugabe von Titanoxid in Gegenwart von Kohle als Reduktionsmittel in der flüssigen Schmelze und anschließendes schnelles Abschrecken der Schmelze. Dabei entstehen reduzierte Titanverbindungen in Form von Suboxiden, Carbiden und/oder Oxycarbiden, wobei die Stabilisierung der Hochtemperaturphasen des Zirkonoxids wahrscheinlich über die Suboxide des Titans erfolgt.

In der US 7,122,064 B2 (EP 1 341 866 B1) werden Schleifkörner auf Basis von Zirkonkorund beschrieben, bei denen die Hochtemperaturphase des Zirkonoxids ebenfalls mit Titanverbindungen in einer reduzierten Form, insbesondere in Form von Oxiden, Suboxiden, Carbiden und/oder Oxycarbiden stabilisiert sind. Die in der EP 1 341 866 B1 beschriebenen Schleifkörner weisen zusätzlich einen Gehalt an Siliziumverbindungen zwischen 0.2 und 0.7 Gew.-%, ausgedrückt als SiO₂, auf. Zwar wird die stabilisierende Wirkung der reduzierten Titanverbindungen durch den Zusatz von SiO₂ deutlich gemindert, jedoch wird gleichzeitig ebenfalls die Viskosität der Schmelze stark verringert, wodurch das Abschrecken der Schmelze, wobei das flüssige Material zwischen Metallplatten eingegossen wird, erleichtert wird. Dies wirkt sich positiv auf das Gefüge des fertigen Schleifkorns aus, so dass sich auf diese Weise ein besonders feinkristallines und homogenes Gefüge realisieren lässt, was neben möglichst hohen Anteilen an Hochtemperaturmodifikation des Zirkonoxids ein weiteres wichtiges Kriterium für die Produktqualität ist.

In der US 4,457,767 wird ein Zirkonkorundschleifkorn beschrieben, das zwischen 0.1 und 2 Gew.-% Yttriumoxid enthält, das als Stabilisator für die Hochtemperaturmodifikationen des Zirkonoxids bekannt ist. Es ist bekannt, dass die stabilisierende Wirkung des Y₂O₃ für die Hochtemperaturphasen des Zirkonoxids stärker ausgeprägt ist als beim reduzierten TiO₂, so dass vergleichsweise weniger Y₂O₃ eingesetzt werden muss, um vergleichbare Anteile an Hochtemperaturphasen zu erhalten.

Schleifkörner auf Basis von Zirkonkorund gehören heute immer noch zu den wichtigsten konventionellen Schleifkörnern für die Bearbeitung der unterschiedlichsten Stahlsorten, sodass weltweit große Anstrengungen unternommen werden, die Leistungsfähigkeit dieser Schleifkörner weiter zu verbessern.

So werden in der US 7,011,689 B2 geschmolzene Zirkonkorundkeramikkörner beschrieben, die bevorzugt 35 bis 50 Gew.-% Zirkonoxid, 48 bis 65 Gew.-% Aluminiumoxid, unter 0.4 Gew.-% SiO₂ und bis zu 10 Gew.-% mindestens eines der Oxide aus der Gruppe Yttriumoxid, Titanoxid und Magnesiumoxid enthalten. Derartige Keramikkörner werden in Gegenwart von Kohle und Aluminiummetall als Reduktionsmittel geschmolzen. Dabei hat man versucht, die Qualität durch eine besondere Verfahrensführung zu verbessern, indem man zum einen Aluminiummetall in Kombination mit Kohle als Reduktionsmittel eingesetzt hat und zum anderen den elektrischen Lichtbogenofen bei einer Spannung von 175 bis 205 V mit einer spezifischen Energie von 2.5 - 4 kWh pro Kilogramm eingesetzten Materials betrieben hat, um auf diese Weise das entstehende Produkt weniger oxidationsanfällig zu machen. Als Stabilisatoren sind in der US 7,011,689 B2 Yttriumoxid, Titanoxid und Magnesiumoxid beschrieben, wobei man zu dem Schluss gekommen ist, dass die mit Yttrium stabilisierten Ausführungsformen zu bevorzugen sind (Spalte 16, Zeilen 16-18). Eine Kombination von Titanoxid und Yttriumoxid als Stabilisatoren ist in Beispiel 22 für ein Material mit einem Gehalt von 28.1 Gew.-% Zirkonoxid beschrieben. Das Verhältnis von Titanoxid zu Yttriumoxid beträgt in diesem Fall ca. 4:1. Das Yttriumoxid liegt mit 0.25 Gew.-% in einer derart geringen Konzentration vor, in der es bekanntermaßen nur eine äußert geringe stabilisierende Wirkung zeigt. Besondere Vorteile sind für diese Kombination nicht angegeben, vielmehr wird das Produkt aufgrund seiner Porosität als außerhalb der Erfindung liegend beschrieben.

In der US 2008/0028685 A1 wird eine Mischung von geschmolzenen Zirkonkorundkörnern beschrieben, die 40 bis 45.5 Gew.% Zirkonoxid, 46 bis 58 Gew.-% Aluminiumoxid, bis 10 Gew.-% Additive, weniger als 0.8 Gew.-% SiO₂ und weniger als 1.2 Gew.-% Verunreinigungen aufweisen. Die Zirkonkorundkörner zeichnen sich dadurch aus, dass sie weniger als 2 % Einschlüsse (inclusions) aufweisen und dass die Konzentration an globulären Ausseigerungen (nodules), gemessen an einer Schnittfläche eines beliebigen Korns dieser Mischung, in mindestens 50 % der Fälle mehr als 500 Ausseigerungen pro mm² beträgt. Als mögliche Additive werden Yttriumoxid, Titanoxid, Magnesium- und Kalziumoxid, Neodym-, Lanthan-, Cer-, Dysprosium- und Erbiumoxid oder irgendeine andere Verbindung aus der Familie der Seltenen Erden oder Mischungen davon genannt, wobei in Anspruch 20 die Menge an Additiven quantifiziert wird und explizit als mögliche Additive Yttriumoxid mit 0.1 bis 1.2 Gew.-% und/oder Titanoxid mit 0.1 bis 3 Gew.-% und/oder Siliziumoxid mit weniger als 0.4 Gew.-% in Gegenwart von Zirkonoxid mit 42 bis 44 Gew.-% beschrieben werden. Eine Kombination dieser Additive wird konkret jedoch nicht genannt oder hervorgehoben.

Die gezielte Herstellung von Ausseigerungen (nodules) und Einschlüssen (inclusions), mit denen die Zirkonkorundkörner charakterisiert werden, ist nicht Gegenstand des oben genannten Dokuments, vielmehr werden die Produkte auf konventionelle Weise aus den üblichen Rohmaterialien in der Schmelze hergestellt und anschließend werden die so erhaltenen Körner analysiert, wobei neben anderen Untersuchungen die Konzentration an Ausseigerungen und Einschlüssen über Anschliffe optisch analysiert werden.

Da bekannt ist, dass die Struktur des Zirkonkorunds Einfluss auf seine Leistungsstärke besitzt, hat man so versucht, die Struktur über die vorhandenen Ausseigerungen und Einschlüsse zu charakterisieren, um auf diese Weise Kornmischungen aussortieren zu können, deren Struktur durch eine bestimmte Anzahl bzw. Konzentration an Ausseigerungen und Einschlüssen charakterisiert ist und die aufgrund dieses Gefüges eine bestimmte Leistungsstärke erwarten lassen. Damit wird in dem vorliegenden Dokument im Prinzip eine neue Art von Ausgangskontrolle für ein altbekanntes Produkt beschrieben.

Eine Kombination von Yttriumoxid mit Titanoxid ist aus der EP 0 480 678 A2 bekannt, in der auf Seite 6 in Tabelle 1 ein Schleifkorn (Beispiel E) beschrieben wird, das eine chemische Zusammensetzung mit 57 Gew.-% Aluminiumoxid, 39.5 Gew.-% Zirkonkoxid, 0.5 Gew.-% Yttriumoxid und 2.12 Gew.-% Titanoxid besitzt. Ziel der Anmeldung ist die Herstellung eines Läppmittels auf Basis von Zirkonkorund, das maximal einen Anteil von 30 Gew.-% tetragonale Phase, bezogen auf den Gesamtanteil an Zirkonoxid, enthalten soll. Das Produkt wird unter oxidierenden Bedingungen geschmolzen und nach dem Abschrecken aus der Schmelze einer Temperäturbehandlung an der Luft unterzogen, um durch Umwandlung der Hochtemperaturphasen des Zirkonoxids in die monokline, bei Raumtemperatur thermodynamisch stabile Phase ein Produkt zu erhalten, dessen Zirkonoxidanteile weniger als 30 Gew.-% an tetragonaler Phase aufweisen.

In der JP 1 614 974 werden Titanoxid- und Yttriumoxid-haltige Zirkonkorunde beschrieben, die hohe Anteile an Zirkonoxid in der tetragonalen Hochtemperaturphase aufweisen. Das in dem Dokument beschriebene Produkt wird jedoch nicht unter reduzierenden Bedingungen hergestellt. So ist aus den Beispielen in den Tabellen 8 und 9 ersichtlich, dass das in dem Produkt vorhandene Titanoxid keinerlei Einfluss auf die Stabilisierung der tetragonalen Hochtemperaturphase zeigt. Ein Produkt (Beispiel 14) mit ca. 6 Gew.-% Titanoxid weist beispielsweise lediglich einen Anteil von 34.2 Gew.-% tetragonales Zirkonoxid, bezogen auf den Gesamtgehalt an Zirkonoxid, auf.

Somit lässt sich der Stand der Technik dahingehend zusammenfassen, dass aus der EP 1 341 866 B1 leistungsstarke Schleifkörner auf Basis von im elektrischen Lichtbogenofen geschmolzenem Al₂O₃ und ZrO₂ bekannt sind, bei denen die Hochtemperaturphase des Zirkonoxids mit reduzierten Titanverbindungen stabilisiert ist. Aus der US 4,457,767 sind vergleichbare leistungsstarke Zirkonkorunde bekannt, die mit 0.1 bis 2 Gew.-% Yttriumoxid dotiert sind, mit dessen Hilfe die Hochtemperaturmodifikation des Zirkonoxids stabilisiert wird. Darüber hinaus sind Zusammensetzungen bekannt, bei denen Titanoxid neben Yttriumoxid eingesetzt wird, wobei jedoch entweder die Stabilisierung einzig und allein vom Yttriumoxid ausgeht, da nicht unter reduzierenden Bedingungen gearbeitet wurde, oder die Herstellbedingungen so gewählt sind, dass nur äußert geringe Anteile an tetragonaler Phase überhaupt auftreten.

Obwohl auch in der neueren Patentliteratur Titanoxid und Yttriumoxid nebeneinander als Stabilisatoren genannt werden, wurde das Thema von Fachleuten nie weiterverfolgt oder aufgegriffen, da keine Hinweise dafür zu erkennen waren, dass für eine derartige Kombination Verbesserungen des Produktes erreicht werden könnten. So sind auch in der eingangs zitierten neueren Patentliteratur keine Versuche in diese Richtung beschrieben.

Bei ihren Bemühungen, die Leistungsfähigkeit von Zirkonkorundschleifkörnern zu verbessern, hat die Anmelderin der vorliegenden Erfindung die Wirkungsweise der unterschiedlichen Stabilisatoren näher untersucht. Dazu wurde die Phasenverteilung des Zirkonoxids in schmelzgegossenen Zirkonkorunden erstmals mit der sogenannten Rietveld-Methode untersucht. Diese Methode baut auf der Röntgenpulverdiffraktometrie auf und lässt anhand der erhaltenen Reflexintensitäten eine quantitative Bestimmung der unterschiedlichen Phasen einer Verbindung zu. Der besondere Vorteil der Rietveld-Methode im Falle des Zirkonkorunds besteht darin, dass mit Hilfe dieser Bestimmungsmethode die Phasenverteilung quantitativ relativ genau analysiert werden und vor allem auch zwischen der kubischen und der tetragonalen Hochtemperaturphase des Zirkonoxids unterschieden werden kann.

In der eingangs zitierten Patentliteratur werden die Anteile an Hochtemperaturphasen zwar ebenfalls über Röntgenbeugung bestimmt, wobei jedoch nur Intensitäten von drei Peaks im Bereich zwischen 28° und 32° (2θ) als Grundlage für die quantitative Analyse herangezogen werden. Ein Nachteil dieser Bestimmung ist, dass sie weniger genau ist und nicht zwischen der kubischen und tetragonalen Hochtemperaturphase unterschieden wird, da der für die Hochtemperaturphasen untersuchte Peak bei ca. 30° (2θ) aus einer nahezu vollständigen Überlagerung der jeweiligen Einzelreflexe der beiden Hochtemperaturphasen entsteht [siehe hierzu auch C.J. Howard, R.J. Hill, Journal Materials Science, 26 (1991)]. In der oben zitierten Patentliteratur wird daher auch fast ausschließlich die tetragonale Phase als Hochtemperaturphase beschrieben. In den wenigen Dokumenten, in denen neben der tetragonalen Phase auch die kubische Phase erwähnt wird, sind keine Angaben darüber zu finden, wie die Phasen bestimmt wurden.

Im Gegensatz zur konventionellen Methode wird mit der Rietveld-Analyse der gesamte Messbereich [bei den hier verwendeten Messergebnissen zwischen 20° und 80 °(2θ)] für die quantitative Analyse der Zusammensetzung herangezogen, wobei die gemessenen Reflexintensitäten und -winkel mit einer theoretischen Berechnung für die zu erwartenden Kristallphasen ins Verhältnis gesetzt werden. Bei einer entsprechend guten Übereinstimmung kann man davon ausgehen, dass die quantitative Analyse hinreichend gesichert ist.

Überraschenderweise wurde bei diesen Untersuchungen festgestellt, dass sich die beiden Stabilisatoren Y₂O₃ und reduziertes TiO₂ im Falle des im elektrischen Lichtbogenofen geschmolzenen Zirkonkorunds nicht nur in ihrer Wirksamkeit, sondern auch in ihrer Wirkweise unterscheiden. So werden bei der Stabilisierung mit reduzierten Titanoxidverbindungen relativ hohe Anteile an kubischer Phase erhalten, während Yttriumoxid als Stabilisator unter den Schmelzbedingungen des Zirkonkorunds überwiegend die tetragonale Hochtemperaturphase liefert.

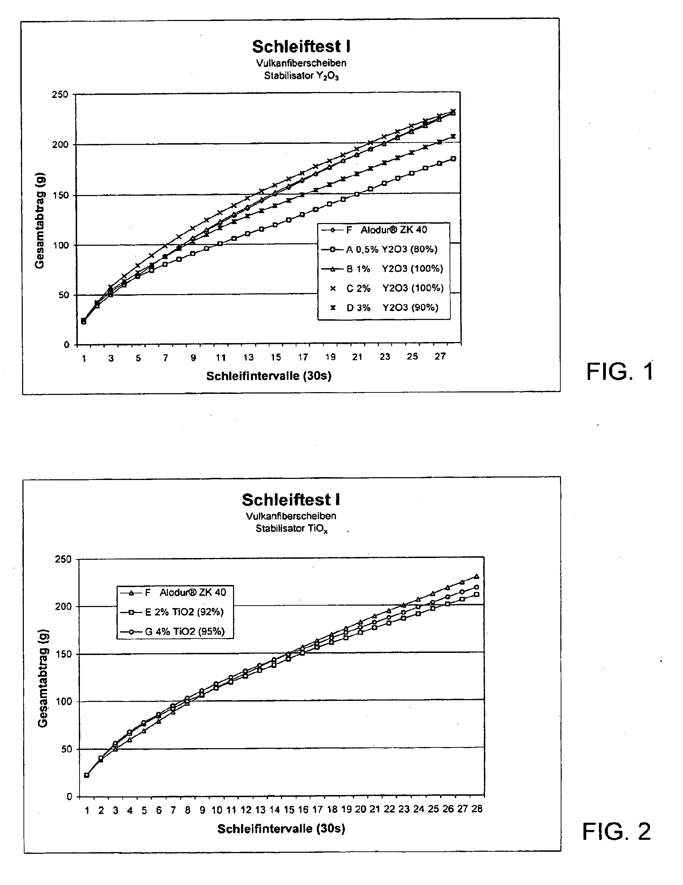

Ausgehend von dieser Erkenntnis wurden dann gezielt unterschiedliche Konzentrationen und Kombinationen der einzelnen Stabilisatoren sowie ihre Wirksamkeit untersucht. Die wichtigsten Ergebnisse dieser Untersuchungen sind in den folgenden Beispielen sowie in den Figuren 1 bis 3 zusammengefasst.

### Beispiel 1 (Musterherstellung)

Zur Herstellung der Muster für die Untersuchungen wurden jeweils ca. 400 kg einer Mischung aus Tonerde (AC 34 Fa. Rio Tinto Alcan, Gardanne), Baddeleyitkonzentrat (Kovdorsky GOK), Zirkonsand (Coferal Mineralien GmbH / Zusammensetzung: 66 Gew.-% ZrO₂, 32 Gew.-% SiO₂; 1,2 Gew.-% Al₂O₃) und Petrolkoks mit unterschiedlichen Mengen Rutilsand (Coferal Mineralien GmbH / Zusammensetzung: 96% TiO₂, 1,5% SiO₂) und/oder Yttriumoxid (Treibacher Industrie AG) im Dreiphasen-Lichtbogenofen bei einer Spannung von 91 V und einer Leistungsaufnahme von 1400 kW geschmolzen. Nach dem vollständigen Aufschmelzen der gesamten Rohstoffmischung (ca. 1 Stunde) wurde die Schmelze jeweils gemäß EP 0 593 977 in einen Spalt von ca. 3 bis 5 mm zwischen Metallplatten gegossen. Die so abgeschreckten Zirkonkorundplatten wurden nach dem vollständigem Erkalten in der üblichen Weise mit Backenbrechern, Walzenbrechern, Walzenmühlen oder Kegelbrechern zerkleinert und zu den gewünschten Korngrößenfraktionen ausgesiebt. Neben Petrolkoks kann auch vorteilhaft Al-Metall als Reduktionsmittel eingesetzt werden, wobei dann ein Teil des Petrolkokses durch Al-Metall ersetzt wird.

In der Tabelle 1 sind die prozentualen Zusammensetzungen der einzelnen Mischungen für die unterschiedlichen im Rahmen der vorliegenden Anmeldung hergestellten Muster zusammengefasst.

**Tabelle 1**

| Muster | Chemische Zusammensetzung der Mischungen (Gew.-%) | | | | | |
|---|---|---|---|---|---|---|
| | Tonerde | Baddeleyite | Zirkonsand | Petrolkoks | Rutil = sand | Y₂O₃ |
| A | 54.5 | 35.0 | 8.0 | 2.0 | - | 0.5 |
| B | 54.0 | 35.0 | 8.0 | 2.0 | - | 1.0 |
| C | 53.5 | 34.5 | 8.0 | 2.0 | - | 2.0 |
| D | 53.0 | 34.0 | 8.0 | 2.0 | - | 3.0 |
| | | | | | | |
| E | 53.5 | 34.5 | 8.0 | 2.0 | 2.0 | - |
| F | 53.0 | 34.0 | 8.0 | 2.0 | 3.0 | - |
| G | 52.5 | 33.5 | 8.0 | 2.0 | 4.0 | - |
| | | | | | | |
| H | 53.0 | 34.5 | 8.0 | 2.0 | 2.0 | 0.5 |
| I | 52.0 | 33.5 | 8.0 | 2.0 | 3.0 | 0.5 |
| | | | | | | |
| J | 53.0 | 34.0 | 8.0 | 2.0 | 2 | 1 |
| K | 52.5 | 33.5 | 8.0 | 2.0 | 3 | 1 |
| L | 52.0 | 33.0 | 8.0 | 2.0 | 4 | 1 |
| | | | | | | |
| M | 53.0 | 34.0 | 8.0 | 2.0 | 1 | 2 |
| N | 52.5 | 33.5 | 8.0 | 2.0 | 1 | 3 |

### Beispiel 2 (Rietveld-Analysen)

Für die Rietveld-Analysen wurden kleinere Proben der jeweiligen Muster in einer Schwingmühle einer Zerkleinerung auf eine Fraktion < 45 µm unterzogen. Die Pulver wurden dann jeweils auf einen Flächenprobenträger für ein Röntgendiffraktometer aufgetragen. Als Röntgendiffraktometer wurde ein Bruker D8 Advance (Bruker AXS GmbH) eingesetzt. Gemessen wurde im Bereich zwischen 20° bis 80°(2θ) mit einer Schrittweite von 0.02° pro 80 sec bei einer Drehung der Probe. Als Strahlenquelle wurde eine handelsübliche Röntgenröhre mit Kupferanode eingesetzt, wobei die Messungen ohne Monochromator mit Cu K_{α/β} Strahlung erfolgten. Als Startmodelle für die Rietveld Berechnungen wurden Daten aus der Literatur herangezogen. So stammen die Daten für monoklines Zirkonoxid aus dem Journal of Applied Crystallography, 29, (1996), 707-713, die für kubisches Zirkonoxid aus Acta Crystallographica B, 39, (1983), 86, und die für tetragonales Zirkonoxid aus dem Journal of Materials Science, 30, (1995), 1621-1625.

### Beispiel 3 (Schleiftests)

Parallel zu den quantitativen Berechnungen der Phasenverteilung wurden mit den entsprechenden Mustern Schleiftests durchgeführt, wobei das Material in Vulkanfiberscheiben und in Trennscheiben getestet wurde.

### Schleiftest I (Vulkanfiberscheiben)

Für die Herstellung der Scheiben wurden handelsübliche Vulkanfiberscheiben mit einer Stärke von 0.8 mm mittels Rakelbeschichtung mit einer Binder-Grundschicht, bestehend aus 56 Gew.-% Phenolharz (Fa. Hexion Speciality Chemicals GmbH), 40 Gew.-% Kalziumcarbonat und 6 Gew.-% Wasser versehen. Das Schleifkorn (reiner Zirkonkorund der Absiebung NP 40) wurde elektrostatisch mit einer Streudichte von ca. 650 g/m³ aufgestreut. Nach dem Trocknen bzw. Härten der Grundschicht wurde eine Deckschicht, bestehend aus 54 Gew.-% Phenolharz (Fa. Hexion Speciality Chemicals GmbH), 20 Gew.-% Kalziumcarbonat, 20 Gew.-% KBF₄ und 6 Gew.-% Wasser aufgetragen. Die Scheiben wurden entsprechend der Herstellerangaben getrocknet und gehärtet. Nach zwölfstündiger Lagerung im Klimaraum werden die Scheiben flexibilisiert und mit einer ringförmigen Matrize auf das passende Endmaß ausgestanzt.

Bei den Schleiftests wurden runde Edelstahlstangen aus Rostfrei Stahl X5CrNi18-10 (Werkstoffnummer 1.4301) mit einem Durchmesser von 20 mm eingesetzt, wobei die Stäbe im rechten Winkel mit einer konstanten Anpresskraft von 16 N/cm² gegen die Scheibe geführt wurden. Die Radialgeschwindigkeit der Scheibe am Werkzeug betrug im Mittel 30 m/s, wobei das Werkstück mit 25 mm/s alternierend auf der Scheibe zum Zentrum hin und vom Zentrum weg bewegt wurde. Um ein frühzeitiges Überhitzen des Werkstückes zu verhindern, wurde die Kontaktstelle zwischen Werkstück und Scheibe mit Pressluft gekühlt.

Die Ergebnisse der Rietveld-Analysen sowie die Schleifresultate für die einfach dotierten Muster sind in der folgenden Tabelle 2 zusammengefasst.

Die Schleifresultate aus der Tabelle 2 sind zusätzlich graphisch in den Figuren 1 und 2 wiedergegeben, wobei in der Figur 1 der Gesamtabtrag (g) in einem Diagramm gegen Zeit (Intervalle von jeweils 30 Sekunden) für verschiedene mit Y₂O₃ stabilisierte Zirkonkorunde dargestellt ist, während in der Figur 2 die analogen Ergebnisse für verschiedene mit reduziertem TiO₂ stabilisierte Zirkonkorunde festgehalten sind.

**Tabelle 2**

| Muster | Dotierung (Gew.-%, bezogen auf das gesamte Schleifkorn) | | Phasenverteilung des Zirkonoxids (Gew.-%, bezogen auf den Gesamtanteil an ZrO₂) | | | | | Abtragsmenge bzw. -leistung nach 28 Intervallen von jeweils 30 Sekunden | |
|---|---|---|---|---|---|---|---|---|---|
| | TiO₂ | Y₂O₃ | Rietveld-Methode | | | | Konv. | g | (%) |
| | | | K* | T** | M*** | K+T | K+T | | |
| A | - | 0.5 | 5 | 45 | 50 | 50 | 75 | 183.9 | 80 |
| B | - | 1.0 | 10 | 65 | 25 | 75 | 90 | 229 | 100 |
| C | - | 2.0 | 15 | 75 | 10 | 90 | 100 | 230.7 | 100 |
| D | - | 3.0 | 18 | 82 | 0 | 100 | 100 | 205.8 | 90 |
| | | | | | | | | | |
| E | 2.0 | - | 20 | 30 | 50 | 50 | 89 | 210.5 | 92 |
| F | 3.0 | - | 25 | 41 | 34 | 66 | 96 | 229.7 | 100 |
| G | 4.0 | - | 60 | 22 | 18 | 82 | 100 | 218.1 | 95 |

| | | | | | | | | | |
|---|---|---|---|---|---|---|---|---|---|
| Anmerkungen zur Tabelle 2: K* = kubisches Zirkonoxid T** = tetragonales Zirkonoxid M*** = monoklines Zirkonoxid B = entspricht im Gehalt an Y₂O₃ dem kommerziell erhältlichen NZ Plus® (Saint-Gobain, Grains and Powders) F = entspricht dem kommerziell erhältlichen Alodur® ZK40 (Treibacher Schleifmittel) | | | | | | | | | |

Zunächst ist allgemein festzuhalten, dass die über die Rietveld-Methode bestimmten Werte für die Hochtemperaturphasen unter den Werten liegen, die mit dem konventionellen Verfahren bestimmt werden, was darauf zurückzuführen sein dürfte, dass mit der Rietveld-Methode der gesamte Messbereich rechnerisch erfasst wird, während beim konventionellen Verfahren lediglich drei ausgesuchte, besonders intensive Peaks zur quantitativen Bestimmung herangezogen werden. Somit kann man die in der Literatur für im elektrischen Lichtbogenofen geschmolzenen Zirkonkorund beschriebenen Anteile an Hochtemperaturphasen nicht direkt mit denen vergleichen, die jetzt über die Rietveld-Methode ermittelt wurden.

Aus dem Stand der Technik ist bekannt, dass die stabilisierende Wirkung des Yttriumoxids ausgeprägter ist als die der reduzierten Titanverbindungen, was auch deutlich aus den Ergebnissen in der Tabelle 2 hervorgeht. Überraschenderweise wurde darüberhinaus nun festgestellt, dass die beiden Stabilisatoren sich nicht nur in ihrer Wirksamkeit sondern auch in ihrer Wirkweise unterscheiden. So werden bei der Stabilisierung mit reduzierten Titanoxidverbindungen relativ hohe Anteile an kubischer Phase erhalten, während Yttriumoxid als Stabilisator unter den Schmelzbedingungen des Zirkonkorunds überwiegend die tetragonale Hochtemperaturphase liefert.

Für die einfach dotierten Muster lieferten die Schleiftests das eindeutige Ergebnis, dass mit der Zugabe einer bestimmten Menge des Stabilisators ein Optimum erreicht wird und eine weitere Zugabe kontraproduktiv ist und keine weitere Steigerung der Schleifleistungen erreicht werden kann, auch wenn dabei die Anteile an Hochtemperaturphasen weiter erhöht werden. Dies wurde sowohl für Yttriumoxid als auch für Titanoxid gefunden, wobei die jeweiligen optimalen Gewichtsanteile unterschiedlich sind. So liegt das Optimum für Yttriumoxid zwischen 1.0 und 2.0 Gew.-%, während das Optimum für reduziertes Titanoxid zwischen 3.0 und 3.5 Gew.-% liegt. Ein weiterer Zusatz des gleichen Stabilisators bringt in beiden Fällen eine Verschlechterung des Produktes, was möglicherweise dadurch erklärt werden kann, dass die erhöhte Konzentration der Fremdionen im Zirkonkorund die Kornfestigkeit verschlechtert und damit zu einem schnelleren Verlust an Schnittigkeit des Schleifkorns im Schleiftest führt.

Nachdem festgestellt worden war, dass die jeweiligen Stabilisatoren eine unterschiedliche Wirkung zeigen, wurden im Rahmen dieser Untersuchungen auch erstmals gezielt Kombinationen der beiden unterschiedlichen Stabilisatoren getestet, wobei überraschenderweise gefunden wurde, dass in einem Bereich, in dem für einen einzelnen Stabilisator in Bezug auf die Auswirkungen auf die Leistungsfähigkeit als Schleifkorn ein Optimum erreicht ist, eine weitere Erhöhung der Gesamtstabilisatormenge nicht nur unschädlich ist, sondern sich sogar positiv auf die Leistungsfähigkeit des Schleifkorns auswirkt, wenn die zusätzliche Stabilisatormenge von einem zweiten unterschiedlichen Stabilisatortyp stammt. Die entsprechenden Ergebnisse sind in der Tabelle 3 zusammengefasst.

**Tabelle 3**

| Muster | Dotierung (Gew.-%, bezogen auf das gesamte Schleifkorn) | | Phasenverteilung nach Rietveld (Gew.-%, bezogen auf den Gesamtanteil an ZrO₂) | | | | Abtragsmenge bzw. -leistung nach 28 Intervallen von jeweils 30 Sekunden) | |
|---|---|---|---|---|---|---|---|---|
| | TiO₂ | y₂O₃ | K | T | M | K+T | (g) | (%) |
| H | 2 | 0.5 | 20 | 50 | 30 | 70 | 229.7 | 100 |
| I | 3 | 0.5 | 25 | 48 | 27 | 73 | 241.5 | 105 |
| | | | | | | | | |
| J | 2 | 1 | 25 | 60 | 15 | 95 | 279 | 121 |
| K | 3 | 1 | 28 | 66 | 5 | 98 | 305.7 | 133 |
| L | 4 | 1 | 32 | 66 | 2 | 98 | 261.8 | 114 |
| | | | | | | | | |
| M | 1 | 2 | 20 | 73 | 7 | 93 | 253.3 | 110 |
| N | 1 | 3 | 20 | 80 | 0 | 99 | 218.1 | 95 |

| | | | | | | | | |
|---|---|---|---|---|---|---|---|---|
| Anmerkungen zur Tabelle 3: K* = kubisches Zirkonoxid T** = tetragonales Zirkonoxid M*** = monoklines Zirkonoxid | | | | | | | | |

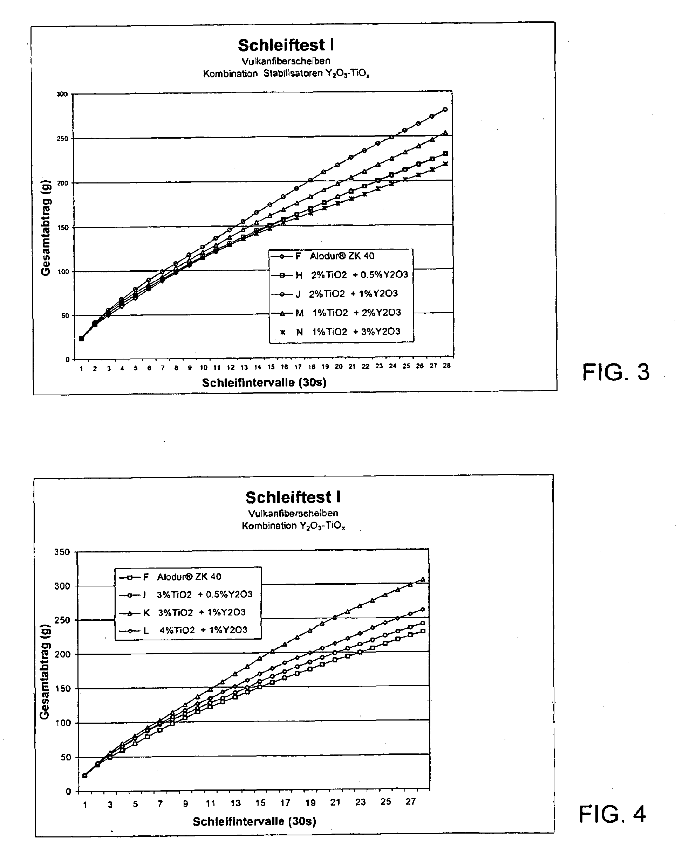

Die in der Tabelle 3 wiedergegebenen Schleifresultate sind in den Figuren 3 und 4 graphisch dargestellt.

Aus der Tabelle sowie den graphischen Darstellungen ist ersichtlich, dass die Leistungsfähigkeit eines Schleifkorns, das mit ca. 3 Gew.-% reduzierten Titanoxidverbindungen stabilisiert ist, durch Zugabe von 1 Gew.-% Yttriumoxid um mehr als 30 % gesteigert werden kann. Eine gesicherte Erklärung für diesen unerwarteten Synergieeffekt der beiden unterschiedlichen Stabilisatoren, der sich insbesondere dann zeigt, wenn die reduzierten Titanoxidverbindungen überwiegen, konnte bisher nicht gefunden werden.

### Trennscheibentest

Zur Absicherung der gefunden Ergebnisse wurden zusätzlich Trennscheibentest durchgeführt.

Für diese Versuchsserie wurden Trennscheiben der Spezifikation R-T1 180x3x22.5 gewählt. Es wurde zuerst eine Pressmischung bestehend aus 75 Gew.-% Zirkonkorund der Körnung F36, 5 Gew.-% Flüssigharz, 12 Gew.-% Pulverharz der Firma HEXION Speciality Chemicals GmbH, 4 Gew.-% Pyrit und 4 Gew.-% Kryolith hergestellt. Zur Herstellung der Scheiben wurden 160 g der Pressmischung auf handelsüblichem Gewebe eingeformt und bei 200 bar gepresst und nach Angaben des Harzherstellers ausgehärtet.

Für den Schleiftest wurden runde Stangen aus Rostfrei Stahl X5CrNi18-10 (Werkstoffnummer 1.4301) mit einem Durchmesser von 20 mm eingesetzt. Die Trennoperationen wurden bei einer Scheibendrehzahl von 8.000 Umdrehungen pro Minute und mit einer Schnittzeit von 3 Sekunden durchgeführt. Nach 12 Schnitten wurde der Scheibenverlust anhand der Abnahme des Durchmessers der Scheiben bestimmt. Aus dem Quotienten von Materialabtrag und Scheibenverlust wurde der G-Wert berechnet.

**Tabelle 4**

| Muster | Dotierung (Gew.-%, bezogen auf das gesamte Schleifkorn) | | G-Wert | |
|---|---|---|---|---|
| | TiO₂ | Y₂O₃ | | |
| B | - | 1.0 | 4.9 | 100% |
| F | 3.0 | - | 5 | 102% |
| H | 2 | 0.5 | 5.2 | 106% |
| I | 3 | 0.5 | 5.4 | 110% |
| J | 2 | 1 | 5.8 | 118% |
| K | 3 | 1 | 6.2 | 126% |
| N | 1 | 3 | 4.7 | 96% |

Es kann somit festgehalten werden, dass die Schleifleistung von Schleifkörnern auf Basis von im elektrischen Lichtbogenofen geschmolzenem Al₂O₃ und ZrO₂ mit einem Gehalt an Al₂O₃ zwischen 52 und 62 Gew.-% und einem Gehalt an ZrO₂ zwischen 35 und 45 Gew.-%, deutlich verbessert werden kann, wenn - ausgedrückt als TiO₂ - zwischen 1 und 5 Gew.-% Titanverbindungen in einer reduzierten Form, insbesondere in Form von Oxiden und/oder Suboxiden und/oder Carbiden und/oder Oxycarbiden und/oder Oxycarbonitriden und/oder Siliziden, zusammen mit Y₂O₃ zwischen 0.5 und 3.0 Gew.-% als Stabilisatoren für die Hochtemperaturphasen des Zirkonoxids in Gegenwart von Kohle eingesetzt werden, wobei das Gewichtsverhältnis von TiO₂ zu Y₂O₃ von 1:2 bis 5:1 beträgt.

In dem entsprechenden Produkt liegen zusammen mindestens 70 Gew.-% des ZrO₂, bezogen auf den Gesamtgehalt an ZrO₂, in der kubischen und tetragonalen Hochtemperaturmodifikation vor, wobei anzumerken ist, dass die entsprechenden Werte mit der Rietveld-Methode zu ermitteln sind. Weiterhin ist es vorteilhaft, wenn die eingesetzten Rohstoffe genügend SiO₂-Anteile aufweisen, so dass im Produkt zwischen Si-Verbindungen zwischen 0.2 und 0.7 Gew.-%, ausgedrückt als SiO₂, vorliegen. Dazu ist anzumerken, dass SiO₂ im elektrischen Lichtbogenofen zu einem großen Anteil zu SiO reduziert und verdampft wird, so dass deutlich höhere Mengen in den Ausgangsstoffen vorhanden sein müssen.

Der Gesamtkohlenstoffgehalt im Produkt liegt zwischen 0.03 und 0.5 Gew.-%, während in der Ausgangsmischung vorteilhaft zwischen 0.5 und 5 Gew.-% Kohle als Reduktionsmittel eingesetzt werden, das insbesondere zur Reduzierung des Titanoxids verbraucht wird und dabei zu einem großen Anteil in Form von CO aus der Schmelze entweicht. Eine vorteilhafte Ausgestaltung der vorliegenden Erfindung sieht vor, dass neben Kohle Aluminiummetall als Reduktionsmittel eingesetzt wird, wobei ein Teil der Kohle durch Aluminiummetall ersetzt wird und bevorzugt Mischungen im Verhältnis von 1:1 eingesetzt werden.

Neben den oben aufgeführten Bestandteilen kann das Produkt zusätzlich bis zu 3.0 Gew.-% Rohstoff-bedingte Verunreinigungen enthalten, ohne dass dadurch die Produktqualität leidet.

Eine vorteilhafte Ausgestaltung der vorliegenden Erfindung sieht vor, dass der Gehalt an Titanverbindungen, ausgedrückt als TiO₂, 1.5 Gew.-% bis 4.0 Gew.-% und der Gehalt an Y₂O₃ 0.5 Gew.-% bis 2.0 Gew.-%, jeweils bezogen auf das Gewicht des fertigen Schleifkorns beträgt, wobei der Gehalt an Titanverbindungen, ausgedrückt als TiO₂, zusammen mit dem Gehalt an Y₂O₃ zwischen 2.0 und 6.0 Gew.-%, bevorzugt zwischen 3.0 und 5.0 Gew.-%, bezogen auf das Gewicht des fertigen Schleifkorns, beträgt.

Die Synergie bei der Kombination der beiden Stabilisatoren in Bezug auf die Schleifleistung ist besonders ausgeprägt, wenn das Gewichtsverhältnis von TiO₂:Y₂O₃ 2:1 bis 4:1 beträgt.

Besonders gute Ergebnisse können mit Schleifkörnern auf Basis von im elektrischen Lichtbogenofen geschmolzenen Zirkonkorunden erzielt werden, in denen mehr als 20 Gew.-% des Gesamtgehalts an Zirkonoxid in der kubischen und mehr als 50 Gew.-% des Gesamtgehalts an Zirkonoxid in der tetragonalen Phase vorliegen, wobei die Bestimmung der Phasenverteilung auf der Rietveld-Methode basiert.

## Patentansprüche

1. Schleifkörner auf Basis von im elektrischen Lichtbogenofen geschmolzenem Al₂O₃ und ZrO₂ mit einem Gehalt an
- Al₂O₃ zwischen 52 und 62 Gew.-%,
- ZrO₂ zwischen 35 und 45 Gew.-%, wobei insgesamt mindestens 70 Gew.-% des ZrO₂, bezogen auf den Gesamtgehalt an ZrO₂, in der tetragonalen und kubischen Hochtemperaturmodifikation vorliegen,
- Titanverbindungen in einer reduzierten Form, insbesondere in Form von Oxiden und/oder Suboxiden und/oder Carbiden und/oder Oxycarbiden und/oder Oxycarbonitriden und/oder Siliziden, zwischen 1 und 5 Gew.-%, ausgedrückt als TiO₂,
- Y₂O₃ zwischen 0.5 und 3.0 Gew.-%,
- Si-Verbindungen zwischen 0.2 und 0.7 Gew.-%, ausgedrückt als SiO₂, einem
- Gesamtkohlenstoff zwischen 0.03 und 0.5 Gew.-% und
- Rohstoff-bedingten Verunreinigungen von weniger als 3.0 Gew.-%,
**dadurch gekennzeichnet, dass**
das Gewichtsverhältnis von TiO₂ zu Y₂O₃ von 1:2 bis 5:1 beträgt.

2. Schleifkörner nach Anspruch 1,
**dadurch gekennzeichnet, dass**
der Gehalt an Titanverbindungen, ausgedrückt als TiO₂, 1.5 Gew.-% bis 4.0 Gew.-% und der Gehalt an Y₂O₃ 0.5 Gew.-% bis 2.0 Gew.-%, jeweils bezogen auf das Gewicht des fertigen Schleifkorns beträgt.

3. Schleifkörner nach Anspruch 1 oder 2,
**dadurch gekennzeichnet, dass**
der Gehalt an Titanverbindungen, ausgedrückt als TiO₂, zusammen mit dem Gehalt an Y₂O₃ zwischen 2.0 und 6.0 Gew.-%, bevorzugt zwischen 3.0 und 5.0 Gew.-%, bezogen auf das Gewicht des fertigen Schleifkorns, beträgt.

4. Schleifkörner nach einem der Ansprüche 1 bis 3,
**dadurch gekennzeichnet, dass**
das Gewichtsverhältnis von TiO₂:Y₂O₃ 2:1 bis 4:1 beträgt.

5. Schleifkörner nach einem der Ansprüche 1 bis 4,
**dadurch gekennzeichnet, dass**
in den Schleifkörnern mehr als 20 Gew.-% des Zirkonoxids in der kubischen Hochtemperaturphase und mehr als 50 Gew.-% des Zirkonoxids in der tetragonalen Hochtemperaturphase vorliegen, jeweils bezogen auf den Gesamtanteil an Zirkonoxid.

## Claims

1. Abrasive grains based on Al₂O₃ and ZrO₂ melted in an electric arc furnace, having a content of
- Al₂O₃ between 52 and 62 wt.-%,
- ZrO₂ between 35 and 45 wt.-%, wherein overall at least 70 wt.-% of the ZrO₂, based on the total content of ZrO₂, is present in the tetragonal and cubic high-temperature modifications,
- titanium compounds in a reduced form, in particular in the form of oxides and/or suboxides and/or carbides and/or oxycarbides and/or oxycarbonitrides and/or silicides, between 1 and 5 wt.-%, expressed as TiO_{2.}
- Y₂O₃ between 0.5 and 3.0 wt.-%,
- Si compounds between 0.2 and 0.7 wt.%, expressed as SiO₂, a
- total carbon between 0.03 and 0.5 wt.-% and
- impurities occasioned by the raw material of less than 3.0 wt.-%,
**characterised in that**
the weight ratio of TiO₂ to Y₂O₃ is 1:2 to 5:1.

2. Abrasive grains according to claim 1,
**characterised in that**
the content of titanium compounds, expressed as TiO₂, is 1.5 wt.-% to 4.0 wt.-% and the content of Y₂O₃ is 0.5 wt.-% to 2.0 wt.-%, based in each case on the weight of the finished abrasive grain.

3. Abrasive grains according to claim 1 or 2,
**characterised in that**
the content of titanium compounds, expressed as TiO₂, together with the content of Y₂O₃ is between 2.0 and 6.0 wt.-%, preferably between 3.0 and 5.0 wt.-%, based in each case on the weight of the finished abrasive grain.

4. Abrasive grains according to one of claims 1 to 3,
**characterised in that**
the weight ratio of TiO₂ to Y₂O₃ is of 2:1 to 4:1.

5. Abrasive grains according to one of claims 1 to 4,
**characterised in that**
in the abrasive grains more than 20 wt.-% of the zirconium oxide is present in the cubic high-temperature phase and more than 50 wt.-% of the zirconium oxide is present in the tetragonal high-temperature phase, based in each case on the total weight content of zirconium oxide.

## Revendications

1. Grains abrasifs à base d'Al₂O₃ et de ZrO₂ fondus dans un four à arc électrique avec une teneur en
- Al₂O₃ entre 52 et 62 % en poids,
- ZrO₂ entre 35 et 45 % en poids, dont au total au moins 70 % en poids du ZrO₂ par rapport à la teneur totale en ZrO₂, se présentent dans les modifications tétragonales et cubiques à haute température,
- composés de titane sous une forme réduite, en particulier en forme d'oxydes et/ou de sous-oxydes et/ou de carbures et/ou d'oxycarbures et/ou d'oxycarbonitrures et/ou de siliciures, entre 1 et 5 % en poids, exprimés en tant que TiO₂,
- Y₂O₃ entre 0,5 et 3,0 % en poids,
- composés Si entre 0,2 et 0,7 % en poids, exprimés en tant que SiO₂,
- carbone total entre 0,03 et 0,5 % en poids et
- impuretés liées à la matière première inférieures à 3,0 % en poids,
**caractérisés en ce que**
le rapport pondéral de TiO₂ par rapport à Y₂O₃ varie entre 1:2 et 5:1.

2. Grains abrasifs selon la revendication 1,
**caractérisés en ce que**
la teneur en composés de titane, exprimée en tant que TiO₂, varie entre 1,5 % en poids et 4,0 % en poids, et la teneur en Y₂O₃, entre 0,5 % en poids et 2,0 % en poids, respectivement par rapport au poids du grain abrasif fini.

3. Grains abrasifs selon les revendications 1 ou 2,
**caractérisés en ce que**
la teneur en composés de titane, exprimée en tant que TiO₂, varie, conjointement avec la teneur en Y₂O₃, entre 2,0 % en poids et 6,0 % en poids, de préférence entre 3,0 % en poids et 5,0 % en poids, respectivement par rapport au poids du grain abrasif fini.

4. Grains abrasifs selon les revendications 1 à 3,
**caractérisés en ce que**
le rapport pondéral de TiO₂:Y₂O₃ varie entre 2:1 et 4:1.

5. Grains abrasifs selon les revendications 1 à 4,
**caractérisés en ce que**
dans les grains abrasifs, plus de 20 % en poids de l'oxyde de zirconium se présentent sous forme de phase cubique à haute température et plus de 50 % en poids de l'oxyde de zirconium, sous forme de phase tétragonale à haute température, respectivement par rapport à la teneur totale en oxyde de zirconium.
